# EUROPEAN PATENT APPLICATION

(11) **EP 4 592 777 A1**
(43) Date of publication of application: **30.07.2025**
(21) Application number: 25152217.3
(22) Date of filing: 16.01.2025
(51) Int. Cl.: G05B 19/19, B29C 65/00

(54) **METHOD AND APPARATUS FOR PERFORMING OPERATIONS ON A PACKAGING MATERIAL**

(30) Priority: 24.01.2024 IT 202400001302
(71) Applicant: Tetra Laval Holdings & Finance S.A., 1009 Pully (CH)
(72) Inventor: CALTABIANO, Daniele, 41123 Modena (IT); BARBI, Massimiliano, 41123 Modena (IT)
(74) Representative: Tetra Pak Patent Attorneys

(57) **Abstract**

There is described a method for performing operations on a packaging material for the production of packages (2) containing a pourable product, the method comprising the steps of: advancing first carts (14a) and second carts (14b) along respective endless tracks (13a, 13b) by means of respective linear motors, each first cart (14a) defining with a corresponding second cart (14b) one respective pair of carts (14) configured to cooperate with one another; conveying each pair of carts (14) along an operative path (P); detecting a position of the first cart (14a) and second cart (14b) of the same pair of carts (14) along the operative path (P), for each pair of carts (14); calculating a position correction for the first cart (14a) and/or for the second cart (14b) based on the detected positions.

## Description

### TECHNICAL FIELD

The present invention relates to a method for performing operations on a packaging material, and in particular on a packaging material for the production of packages containing a pourable product, preferably a pourable food product.

The present invention also relates to an apparatus for performing operations on a packaging material, and in particular on a packaging material for the production of packages containing a pourable product, preferably a pourable food product.

In particular, the present invention will refer, without however losing on generality, to a method and an apparatus for forming and sealing a tube of packaging material for the production of sealed packages containing a pourable product, said tube being obtained from a web of packaging material.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging lines, which comprise packaging machines configured to form and fill the packages starting from a multilayer packaging material.

In particular, according to a non-limiting example of a packaging machine, a continuous tube is formed starting from a web of packaging material initially wound in a reel and fed through a plurality of unwinding rollers. The web of packaging material is sterilized in the packaging machine, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, advanced by the aforementioned unwinding rollers, is folded and sealed longitudinally to form the tube by means of a known web folding unit.

The tube is fed continuously along a first direction, normally a straight vertical direction, is filled with the sterilized food product from above and is formed, sealed and subsequently cut along equally spaced transversal cross-sections extending along a second direction, normally a direction orthogonal to the first direction.

In order to perform the forming and sealing operations, the known packaging machines comprise a forming and sealing unit configured to form the tube, so as to imprint an external shape to it corresponding to the desired shape of the package, and to seal the tube at equally spaced cross-sections orthogonal to the tube advancement direction.

In detail, the forming and sealing unit comprises a plurality of forming members, configured to form the tube, and sealing members, configured to seal the tube at said equally-spaced cross sections.

Generally, a packaging machine of the above type comprises a pair of alternately movable forming and sealing jaws which are controllable with a reciprocating movement in the first direction and in a third direction orthogonal to the first direction and second direction to interact with the tube at successive portions thereof.

So-called pillow packs are obtained thereby, which have a longitudinal sealing band, a top transversal sealing band and a bottom transversal sealing band.

The pillow packs are then cut at the cross-sections to be separated from one another and directed to a folding unit of the packaging machine for the final folding thereof.

The finished packages are thereby obtained.

The use of linear motors in the forming and sealing unit is increasingly widespread.

As it is known, linear motors typically comprise an endless track, including electrically-powerable solenoids or coils, and a plurality of carts which are movably coupled to the track, which comprise each a permanent magnet, and which are movable along the track by means of electromagnetic interaction with the track.

In detail, in this case the forming and sealing unit comprises two conveyors, each one provided with:
- a fixed frame;
- an endless track carried by the fixed frame;
- a plurality of carts movably coupled to the track and configured to be advanced (controlled) along the track independently from one another, by means of the respective linear motor.

In greater detail, such type of forming and sealing unit usually comprises:
- a first endless track and a second endless track which are arranged on respective opposite lateral sides of the tube;
- a plurality of first carts movably coupled to the first track;
- a plurality of second carts movably coupled to the second track.

As it is known, the first carts and the second carts are configured to cyclically cooperate with one another in pairs and with the tube so as to form and seal respective tube portions of the tube, thereby producing the above-mentioned pillow packs.

Pairs of carts cyclically cooperating with one another along an operative path are thereby defined, whereby the operative path is usually parallel to said first direction and hence to the tube.

It may be said that the tube is advanced along the operative path.

It is known the need for assembling the conveyors of the forming and sealing unit, i.e. both the first and second tracks, the respective frames supporting the tracks, and the first and second carts, with a predetermined and rather high grade of accuracy, so that the forming and sealing operations to be performed on the tube are carried out with the expected precision and performance. This results in a minimized risk of faulty packs and leads to a reduction in discarded and/or faulty packages.

Although being structurally and functionally valid, the known forming and sealing units are still open to further improvement. In particular, a need is felt to further reduce the production and manufacturing costs and the time needed for assembling the known forming and sealing units and/or calibrating the forming and sealing units before the start of the forming and sealing process.

### DISCLOSURE OF INVENTION

It is therefore an object of the present invention to provide a method and an apparatus for performing operations on a packaging material which are designed to meet the above-mentioned need in a straightforward and low-cost manner.

This object is achieved by a method and an apparatus for performing operations on a packaging material as claimed in the appended independent claims. Preferred embodiments of the present invention are laid down in the appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging machine comprising a forming and sealing unit according to the present invention;
Figure 2 is a schematic lateral view, with parts removed for clarity, of the forming and sealing unit according to the present invention;
Figures 3a and 3b are larger-scale lateral views, with parts removed for clarity, of a detail of the forming and sealing unit of Figure 2, during two distinct operative conditions; and
Figure 4 is a larger-scale perspective view, with parts removed for clarity, of the forming and sealing unit.

### BEST MODE FOR CARRYING OUT THE INVENTION

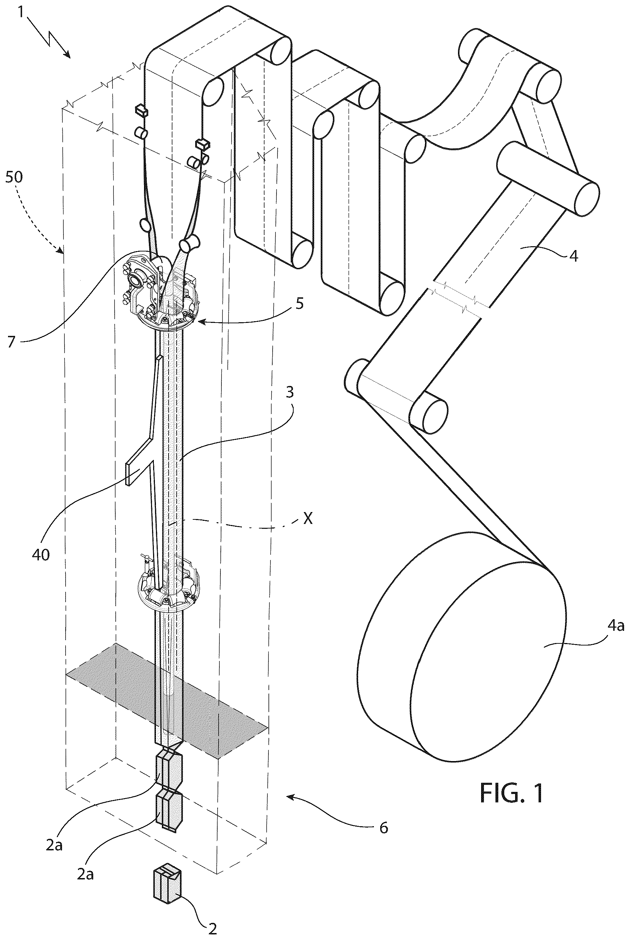

With reference to Figure 1, number 1 indicates as a whole a packaging machine configured to produce sealed packages 2 containing a pourable product, preferably a pourable food product such as pasteurized or UHT milk, water, fruit juice, wine, peas, beans, etc.

In detail, packaging machine 1 is configured to form, seal and fold packages 2 starting from a web 4 of packaging material, which is initially wound in a reel 4a, and then folded into a tube 3 of packaging material, as explained below.

The packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of the package 2 eventually contacting the pourable product.

Preferably, packaging machine 1 is part of a packaging line (known per se and not shown) configured for producing, grouping and boxing a plurality of packages 2 in a known manner.

As schematized in Figure 1, packaging machine 1 comprises:
- conveying means configured to advance web 4 along an advancement path P;
- a tube folding device 5 configured to progressively fold web 4 into a tube 3;
- a sealing element 40 for longitudinally seal tube 3, in a manner known and not described in detail;
- a filling device 7 for filling tube 3 (from above) with the pourable product;
- an apparatus 6 configured to perform operations on the packaging material.

According to this preferred and non-limiting embodiment shown, the apparatus 6 includes (and in particular is defined by) a forming and sealing unit 6 configured to shape tube 3 of packaging material and seal tube 3 along successive transversal cross-sections thereof in order to obtain a sequence of pillow packs 2a, in a manner known and not described in detail.

Hence, the aforementioned operations include, at least, shaping tube 3 and sealing tube 3.

Alternatively, apparatus 6 may be configured to perform other kind of operations on the packaging material, such as operations on web 4 prior to being folded into tube 3 or operations on the formed and sealed packs 2a or packages 2, for example a straw application or a label or tag application or a cap application.

Packaging machine 1 further comprises:
- an isolation chamber 50 internally defining an environment containing a controlled atmosphere, in particular sterile and/or aseptic gas, preferably sterile and/or aseptic air, and housing the forming and sealing unit 6, the tube folding device 5, the sealing element 40 and the filling device 7;
- a folding device (not shown) configured to sequentially fold packs 2a in order to obtain a plurality of sealed packages 2.

Tube folding device 5 and sealing element 40 define together a tube forming unit.

Preferably, forming and sealing unit 6 has an axis X along which tube 3 is fed, in use.

Axis X is parallel to a straight direction, which preferably is a vertical direction.

Hence, in use, tube 3 is fed along axis X, downwards, and while being filled from above is formed and sealed by apparatus 6.

More specifically, tube 3 is drawn (downwards) along axis X by apparatus 6 in a known manner.

In this way, a plurality of pillow packs 2a are obtained.

In light of the above, packaging machine 1 is configured to form and seal a plurality of pillow packs 2a containing the pourable product starting from web 4 and tube 3 and then to fold the pillow packs 2a for obtaining the aforementioned formed, sealed and folded packages 2 containing the pourable product.

The apparatus 6 to perform operations on the packaging material is exemplified in the following as a forming and sealing unit 6. The apparatus 6 comprises a plurality of operative members, e.g. actuators, which are arranged in pairs and thereby located at the packaging material and which are configured to cyclically engage therewith. For example, in a preferred and non-limiting embodiment, the apparatus 6 may comprise:
- a plurality of forming members 8 which are arranged in pairs and thereby located on opposite lateral sides of axis X and which are configured to cyclically engage successive longitudinal portions of tube 3 for the shaping thereof, in a known manner; and
- a plurality of sealing members 10 which are arranged in pairs (each pair comprising a sealing element and a countersealing element) and thereby arranged at opposite lateral sides of axis X and which are configured to cyclically engage tube 3 at the equally spaced cross-sections in a clamping manner, so as to define transversal sealing bands on tube 3, in a known manner.

According to the non-limiting embodiment shown, each forming member 8 includes an internally shaped half-shell configured to cyclically interact in contact with tube 3 for imprinting its shape thereon.

In detail, and according to a manner described below, forming members 8 are movable towards and away from one another and from tube 3 along a first direction A transversal to axis X, and in particular orthogonal to axis X, for cyclically surrounding and engaging tube 3 and shaping tube 3 at the successive portions.

In order to obtain the cyclical engagement of the operative members or actuators with the packaging material, e.g. in this preferred embodiment of the forming members 8 and sealing members 10 with tube 3, the apparatus 6 comprises a conveyor device.

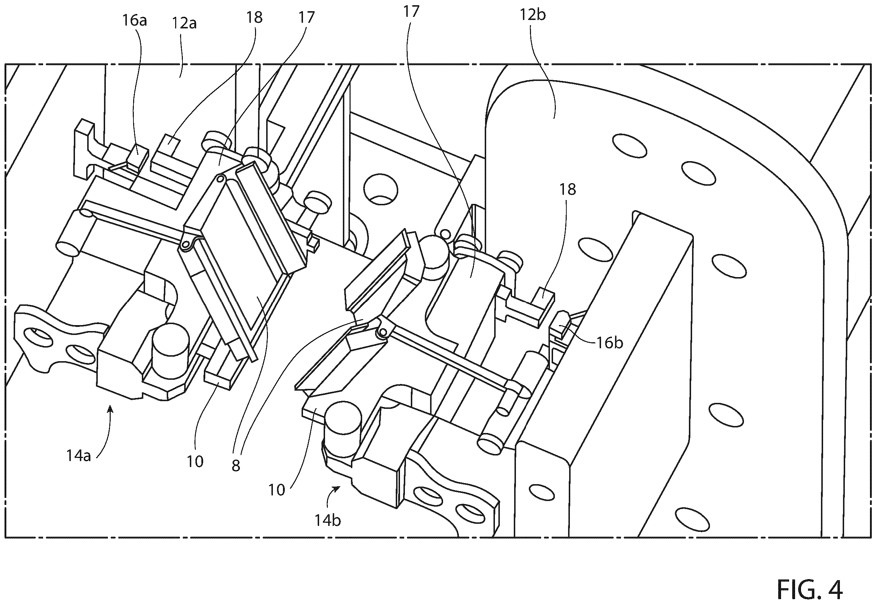

According to the present disclosure, the conveyor device is of the linear motor type and comprises:
- a first fixed frame 12a and a second fixed frame 12b (Figure 4) arranged at the packaging material, e.g. in this preferred embodiment on respective lateral sides thereof, and spaced apart from one another along the first direction A;
- a first endless track 13a supported by, and extending on, first frame 12a and a second endless track 13b supported by, and extending on, second frame 12b;
- first carts 14a movably coupled to first track 13a and second carts 14b movably coupled to second track 13b;
- a first linear motor (not shown) configured to cyclically move first carts 14a along first track 13a independently from one another, and a second linear motor (not shown) configured to cyclically move second carts 14b along second track 13b independently from one another.

Each one of the first track 13a and second track 13b includes a series of electrically-powerable solenoids or coils, preferably embedded in the relative first frame 12a and second frame 12b.

Each one of the first carts 14a and second carts 14b carries at least one permanent magnet.

Hence, according to a known operation of the linear motors, each cart 14a, 14b is movable along the respective track 13a, 13b by electromagnetic interaction of the permanent magnets with the solenoids.

First carts 14a and second carts 14b are configured to cyclically cooperate with one another in pairs and with the packaging material, e.g. in this preferred embodiment with the tube 3, so as to form and seal respective tube portions of tube 3, thereby producing the above-mentioned pillow packs 2a.

Pairs of carts cyclically cooperating with one another along an operative path P are defined, whereby operative path P is preferably parallel to axis X and hence to tube 3.

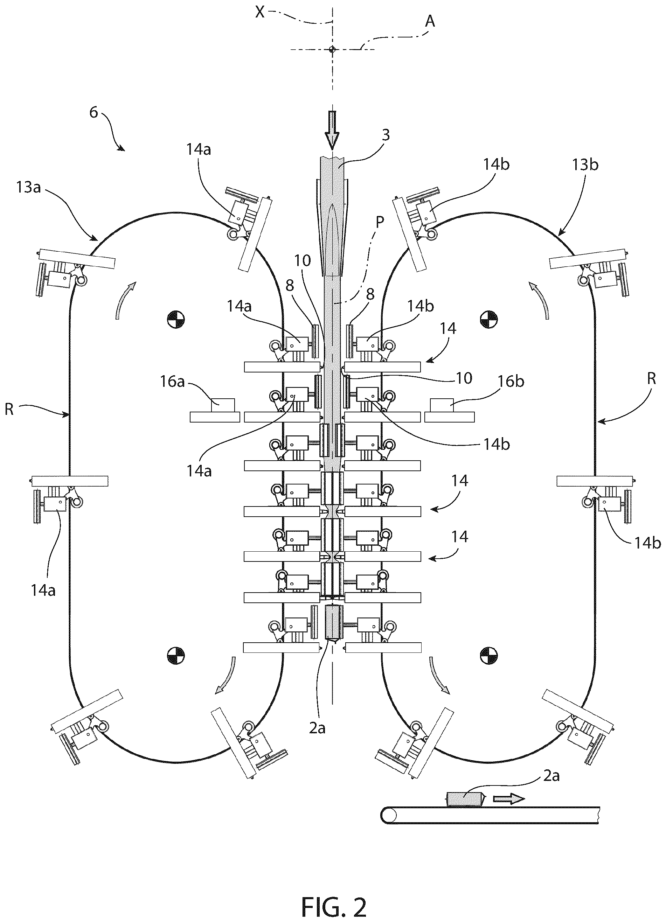

Each first cart 14a defines with a corresponding second cart 14b one respective pair of carts 14 configured to (cyclically) cooperate with one another and configured to mutually (and cyclically) interact with the packaging material along operative path P. For example, according to the preferred embodiment shown, the pair of carts 14 may be configured to shape and seal tube 3, as schematically shown in Figure 2.

It is specified that reference number 14 indicates one pair of carts.

To this end, each cart 14a, 14b carries a forming member 8 and a sealing member 10 (as schematically shown in Figure 2 and as shown in Figure 4).

For each cart 14a, 14b, sealing member 10 is arranged operatively downstream of forming member 8, with respect to the advancement direction of the cart along the respective track 13a, 13b.

In light of the above, forming members 8 and sealing members 10 are cyclically carried by the respective carts 14a, 14b and by means of the first and second linear motors along operative path P for cyclically and repeatedly engaging the successive portions of tube 3, as explained above.

Being first track 13a and second track 13b endless, they define each a respective closed-loop path, which includes operative path P, and shares operative path P in common with the other closed-loop path, and a return path R. Therefore, carts 14a and 14b are also conveyed cyclically along the respective return path R.

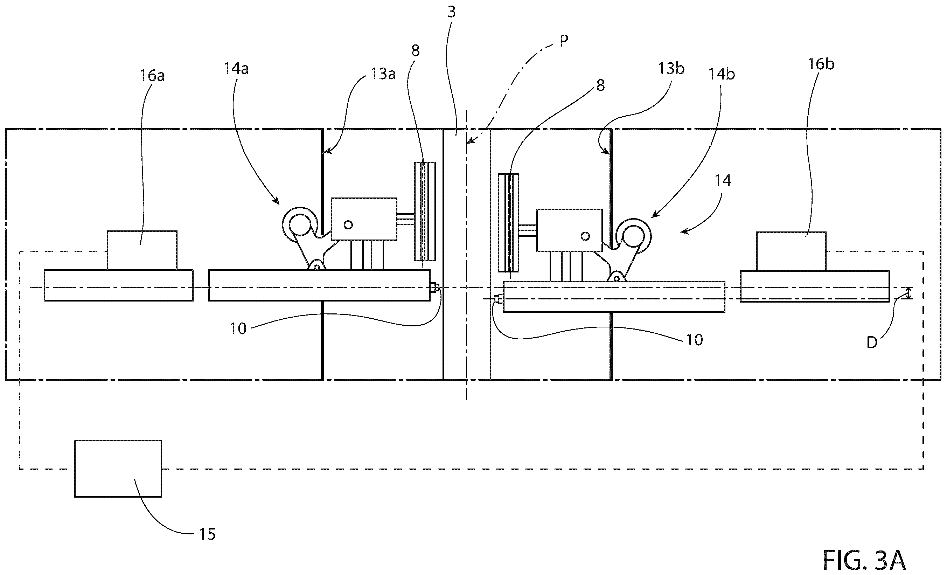

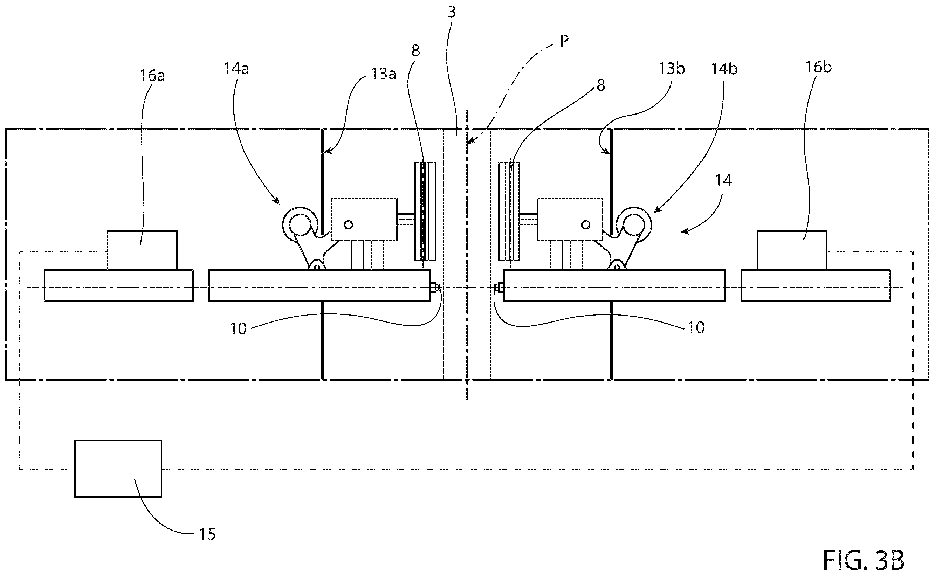

The apparatus 6 further comprises a control unit 15 (only schematically shown in Figures 3a and 3b) which is configured to control the operation of the first linear motor and the second linear motor.

In detail, control unit 15 is configured to control the advancement of first carts 14a along first track 13a and the advancement of second carts 14b along second track 14b.

In greater detail, control unit 15 is configured to control a cyclical conveying of each pair of carts 14 along operative path P.

As said, first cart 14a and second cart 14b of each pair of carts 14 perform operations, in use, on the packaging material, and specifically on tube 3, by mutually interacting therewith along operative path P.

According to an aspect of the present disclosure, apparatus 6 comprises:
- a first position sensor 16a fixed with respect to first frame 12a, and therefore with respect to first track 13a, and associated with first carts 14a; and
- a second position sensor 16b fixed with respect to second frame 12b, and therefore with respect to second track 13b, and associated with second carts 14b.

More precisely, first position sensor 16a is arranged in a fixed position along operative path P, even more precisely is rigidly mounted to first frame 12a in such a fixed position.

Similarly, second position sensor 16b is arranged in a fixed position along operative path P, even more precisely is rigidly mounted to second frame 12b in such a fixed position.

Advantageously, the fixed position of the first and second position sensor 16a, 16b allows for an absolute reference of the position, thus improving a robustness of the monitoring.

First position sensor 16a is configured to sequentially detect a position of each first cart 14a along operative path P and to generate a first signal correlated with each position detection.

Similarly, second position sensor 16b is configured to sequentially detect a position of each second cart 14b along operative path P and to generate a second signal correlated with each position detection.

According to an aspect of the present disclosure, control unit 15 is configured to, for each pair of carts 14:
- receive the first signal and the second signal;
- calculate a position correction for the first cart 14a and/or for the second cart 14b based on the received first signal and second signal, and in particular based on the detected positions.

In particular, control unit 15 is configured to, for each pair of carts 14:
- calculate an offset D between the detected positions of first cart 14a and second cart 14b of the same pair of carts 14 based on the first signal and on the second signal (Figure 3a); and
- controlling said position correction as a function of the offset D.

More in particular, control unit 15 is configured to, for each pair of carts 14, control a compensation of the calculated offset D by means of at least one of the first linear motor and the second linear motor (Figure 3b) .

In particular, according to the present disclosure and for each pair of carts 14, control unit 15 is configured to:
- calculate a distance D between first cart 14a and second cart 14b along a direction parallel to operative path P and based on the detected positions, i.e. to the received first signal and second signal; and
- displace, e.g. during a testing or calibration phase, at least one of the first cart 14a and second cart 14b of the same pair of carts 14 along the direction parallel to the operative path P and until the calculated distance D is smaller than a predetermined threshold value, which is preferably zero.

More in particular, control unit 15 is configured to vary a position (i.e. to control a position variation) of at least one of the first cart 14a and second cart 14b of the same pair of carts 14 with respect to the other one of the first cart 14a and second cart 14b of the same pair of carts 14, along the direction parallel to the operative path P and until the calculated distance D is smaller than the predetermined threshold value.

In light of the above, offset D is defined by a non-zero distance between the detected positions of the carts 14a, 14b of the same pair of carts 14 along operative path P.

In practice, apparatus 6 is advantageously configured to detect, by means of the first position sensor 16a and second position sensor 16b, a possible position offset D which may be present between the first cart 14a and second cart 14b of the same pair of carts 14, and to compensate such offset D by means of the first and second linear motors, i.e. by varying the relative position of such first cart 14a and second cart 14b. Control unit 15 is configured to control such operations.

In light of the above, two distinct operative conditions of apparatus 6 may be identified: a nominal operative condition, whereby no offset D is detected (calculated) between the detected positions of the first cart 14a and second cart 14b along operative path P, and a non-nominal operative condition, whereby an offset D greater than the predetermined threshold value, for example greater than zero, is detected (calculated) between the detected positions of the first cart 14a and second cart 14b along operative path P.

In the nominal operative condition, first cart 14a and second cart 14b of the same pair of carts 14 are aligned along said first direction A orthogonal to axis X (i.e. to operative path P). No offset D is calculated and therefore no compensation is needed.

Instead, in the non-nominal operative condition, control unit 15 may control, e.g. during a testing or calibration phase, a compensation of the calculated offset D by controlling the first and/or the second linear motor, depending on the offset value detected.

Such advantageous configuration may be implemented for performing a training or calibration of the apparatus 6, for example during a starting transient or calibration phase of apparatus 6 (such as after a maintenance or cleaning process, or at the start of a production shift), whereby the calibration is performed by said position detection, offset calculation and offset compensation by means of control unit 15.

Alternatively, or in addition, the advantageous configuration described above may be implemented for performing a monitoring of the operation of apparatus 6, for example during a production shift of packages 2 during which tube 3 is formed and sealed, whereby the calibration is performed by said position detection, offset calculation and offset compensation by means of control unit 15.

Thanks to the advantageous configuration of apparatus 6 described above, the assembling of apparatus 6 can be carried out faster, since possible tolerance errors and mispositioning of the component thereof are compensated for by sensors 16a, 16b and by control unit 15, in an easy, fast and completely automatic manner (during the aforementioned calibration).

This leads to highly reduced time and costs for manufacturing, assembling and maintenance.

Furthermore, as possible offsets D may be detected, calculated and optionally promptly compensated (during the aforementioned monitoring), undesired stops for recalibrating the pair of carts 14 can be minimized, thereby leading to lower production costs.

In one embodiment, in addition or in alternative to controlling the offset compensation, control unit 15 may be configured to emit an alert and/or issue a warning if the calculated offset D is above a first threshold value.

Furthermore, in one embodiment control unit 5 may be configured to control a stop of apparatus 6 and/or of packaging machine 1 if the calculated offset D is above a second threshold value greater than the first threshold value.

In this way, if the offset D is too large, the unit 6 can be stopped automatically for allowing a manual recalibration, for example if the offset D is too large to be compensated automatically.

Conveniently, first position sensor 16a and second position sensor 16b are arranged at the same axial position, or height or coordinate, with respect to axis X, and along operative path P.

More precisely, first position sensor 16a and second position sensor 16b are aligned to one another along direction A.

The Applicant has observed that this arrangement of sensors 16a, 16b allows for the most precise and effective detection of the positions of first cart 14a and second cart 14b, for each pair of carts 14, and calculation of offset D.

As visible in Figure 4, each first cart 14a and second cart 14b comprises:
- a frame 17 which is movably coupled with first track 13a or second track 13b, respectively, and carries an operative member for performing said operations on the packaging material, and more precisely carries one forming member 8 and one sealing member 10; and
- a bracket 18 mounted directly to frame 17 without interposition of parts.

Advantageously, first sensor 16a is configured to sequentially detect the position of the brackets 18 of first carts 14a along operative path P, and second sensor 16b is configured to sequentially detect the position of the brackets 18 of second carts 14b along operative path P.

Accordingly, control unit 15 is advantageously configured to calculate, for each pair of carts 14, the relative distance between the detected position of the brackets 18 of the first cart 14a and second cart 14b of the same pair of carts 14 along said direction parallel to operative path P and based on the first signal and the second signal.

The Applicant has observed that this arrangement allows for the most precise and effective detection of the positions of first cart 14a and second cart 14b, for each pair of carts 14. In fact, as brackets 18 are directly mounted on frames 17, without interposition of any parts, the chain of tolerance errors is the shortest possible, thereby leading to a very precise position detection.

In one embodiment, first position sensor 16a and second position sensor 16b are optical sensors. Preferably, first position sensor 16a and second position sensor 16b are laser sensors.

The Applicant has found such type of sensor the most effective for such application, which requires a rather fast reading, given the speed at which the carts 14a, 14b advance along tracks 13a, 13b.

Alternatively, first position sensor 16a and second position sensor 16b may be magnetic sensors, i.e. sensors which detect the position based on a variation of inductance and/or of electromagnetic field.

This is particularly advantageous when operating in a wet or soggy environment: the operation of optical sensors may be hindered by the presence of vapor, water or other particles thereon, whereas this is not the case for the magnetic sensors.

Alternatively, first position sensor 16a and second position sensor 16b may be mechanical sensors, such as sensors including cams and/or a mechanical switch to be activated/deactivated.

Advantageously, control unit 15 is configured to control the compensation of the calculated offset D before the forming members 8 of the relative pair of carts 14 form tube 3 and before the sealing members 10 of the relative pair of carts 14 interact with tube 3.

In this way, there is no need for a cyclical releasable mechanical coupling between the first cart 14a and second cart 14b of each pair of carts 14 along operative path P, as it is the case for the apparatus 6 of the known type.

This results in a significative reduction of wear and also in a leaner and less cumbersome architecture. Moreover, weight of each cart 14a, 14b is reduced, which leads to better inertial behavior, given the high operational speeds at which carts 14a, 14b operate.

From the foregoing, it becomes clear that apparatus 6 according to the present disclosure enables for the implementation of a method for performing operations on a packaging material for the production of packages 2 containing a pourable product, and in particular of a method for forming and sealing a tube 3 of packaging material for the production of sealed packages 2 containing a pourable product.

The method comprises the steps of:
a) advancing first carts 14a along a first endless track 13a by means of a first linear motor;
b) advancing second carts 14b along a second endless track 13b by means of a second linear motor, each first cart 14a defining with a corresponding second cart 14b one respective pair of carts 14 configured to cooperate with one another;
c) cyclically conveying, by means of the first linear motor and the second linear motor, each pair of carts 14 along an operative path P along which the first cart 14a and second cart 14b of such pair of carts 14 perform operations on the packaging material, and in particular form and seal tube 3, by mutually interacting with the packaging material, and in particular with tube 3;
d) advancing the packaging material, and in particular tube 3, along a direction parallel to the operative path P;
e) detecting a position of the first cart 14a and second cart 14b of the same pair of carts 14 along the operative path P, for each pair of carts 14;
f) calculating a position correction for the first cart 14a and/or for the second cart 14b based on the detected positions.

The position correction calculation may be based on a first correction value and/or a second correction value. The first correction value is indicative of a position difference between the detected position of the first cart 14a with respect to a first nominal position value. The second correction value is indicative of a position difference between the detected position of the second cart 14b with respect to a second nominal position value. The first nominal position value and the second nominal position value may coincide along the direction parallel to the operative path P. If the first and second correction value are substantially zero or below a certain threshold value, the position correction may be null.

Advantageously, a (preferably continuous) control of the physical status of the carts can be achieved thanks to the instant solution. The instant solution provides one or more advantages:
- the system is more robust and the quality of the products is improved,
- a condition monitoring of the carts may be facilitated,
- a constant monitoring of the carts may be achieved, e.g. during normal operation of the system and during training or calibration phases.

The method may comprise, if a position correction reaches a predetermined anomaly threshold, adjusting operation of first and/or second cart 14a, 14b, for example by:
- (preferably immediately) correcting the position of the first and/or second cart 14a, 14b as a function of the calculated position correction, and/or
- slowing down and/or interrupting operation of the apparatus 6, e.g. by slowing down or interrupting the advancement of the first and/or second cart 14a, 14b.

The predetermined anomaly threshold may be indicative of an anomaly being present in the operation of the first and/or second cart 14a, 14b.

The method may comprise, if a position correction reaches a number of anomaly thresholds, e.g. including the predetermined anomaly threshold, transmitting an alert indicative of the position correction calculated.

Advantageously, the apparatus 6 may be monitored for more than one anomaly threshold (e.g. the position correction reaching a number of anomaly threshold) and not just an anomaly threshold that may be indicative of incorrect operation of the first and/or second cart. This way a condition monitoring may be more robust.

Preferably, the method comprises the steps of:
g) calculating an offset D between the detected positions of said first cart 14a and second cart 14b of the same pair of carts 14; and
h) calculating the position correction as a function of the offset D. In particular, if the offset D is substantially zero or below a certain threshold value, the position correction may be null.

Preferably, the method may comprise performing the position correction for the first cart 14a and/or for the second cart 14b by means of at least one of the first linear motor and the second linear motor.

In one embodiment, the step of performing the position correction is carried out by compensating the calculated position correction by means of at least one of the first linear motor and the second linear motor.

Preferably, the method comprises the step of:
i) periodically calibrating the positions of the first cart 14a and second carts 14b, for each pair of carts 14, based on the calculated offset D and during a calibration phase of the apparatus 6, different from an operating phase wherein the apparatus 6 performs said operations on the packaging material.

Preferably, the step of performing the correction comprises, for each pair of carts 14, displacing at least one of the first cart 14a and second cart 14b of the same pair of carts 14 along a direction parallel to the operative path P as a function of the calculated position correction, preferably until the calculated offset D is smaller than a predetermined threshold value, preferably zero.

Preferably, the step e) of detecting comprises, for each pair of carts 14:
- detecting a position of the first cart 14a along the operative path P;
- detecting a position of the second cart 14b along the operative path P;

the step g) of calculating comprises, for each pair of carts 14, calculating a distance D between the detected positions of the first cart 14a and the second cart 14b along a direction parallel to the operative path P;
the step of performing the position correction is carried out if said distance D is greater than a predetermined distance value, preferably zero.

Preferably, the step of performing the position correction comprises, for each pair of carts 14, varying a position of at least one of the first cart 14a and second cart 14b with respect to the other cart of the same pair of carts 14, along a direction parallel to the operative path P.

Preferably, the step e) of detecting is carried out for each said first cart 14a by means of a first sensor 16a fixed with respect to the first track 13a, and for each said second cart 14b by means of a second sensor 16b fixed with respect to the second track 13b.

Preferably, the step e) of detecting comprises sequentially detecting the position of said brackets 18 along the operative path P.

In particular, the step g) of calculating comprises, for each pair of carts 14, calculating the relative distance D between the detected positions of said brackets 18 of the first cart 14a and second cart 14b of the same pair of carts 14, along a direction parallel to the operative path P.

In one embodiment, the method comprises the step of:
l) calibrating an apparatus 6 for performing operations on the packaging material comprising said first track 13a, said second track 13b, said first carts 14a and said second carts 14b by performing the step of performing the position correction for the first cart (14a) and/or for the second cart (14b) during a calibration phase of the apparatus 6, different from an operating phase wherein the apparatus 6 performs said operations on the packaging material.

In one embodiment, the method comprises the step of:
m) monitoring an operation of said apparatus 6 by performing the steps e) of detecting and f) of calculating during performing said operations on the packaging material.

It is further clear how the method according to the foregoing enables to implement a computer program product comprising instructions loadable in, and executable by, electronic processing resources and programmed to cause, when executed, said electronic processing resources to perform the steps of the method according to the above.

To this end, it is emphasized that what matters are the instruction that must be implemented to realize such method and not the hardware and software architectures with which such operations are implemented; these could be implemented through a concentrated architecture, for example a single electronic device such as an ECU (Electronic Control Unit) or through a distributed cooperative architecture, comprising several electronic devices in communication and cooperating with each other, according to a proprietary logical architecture that the manufacturer of the computer program product will decide to adopt.

The advantages of apparatus 6 and of the method according to the present invention will be clear from the foregoing description.

In particular, the assembling of apparatus 6 can be carried out faster, since possible tolerance errors and mispositioning of the component thereof are compensated for by sensors 16a, 16b and by control unit 15, in an easy, fast and completely automatic manner (the aforementioned calibration).

Accordingly, the need for stopping unit 6 and therefore machine 1 for a manual intervention to recalibrate the unit 6 is highly reduced.

This leads to a significative decrease in manufacturing, assembling and maintenance time and costs.

Furthermore, as possible offsets D may be detected and compensated during the production process (the aforementioned monitoring), undesired stops for recalibrating the pair of carts 14 can be minimized, thereby leading to lower production costs.

In practice, the production and manufacturing costs and the time needed for assembling apparatus 6 and/or for calibrating apparatus 6 before the start of the forming and sealing process are significatively reduced.

Clearly, changes may be made to apparatus 6 and to the related method as described herein without, however, departing from the scope of protection as defined in the accompanying claims.

## Claims

1. Method for performing operations on a packaging material for the production of packages (2) containing a pourable product, the method comprising the steps of:
a) advancing first carts (14a) along a first endless track (13a) by means of a first linear motor;
b) advancing second carts (14b) along a second endless track (13b) by means of a second linear motor, each first cart (14a) defining with a corresponding second cart (14b) one respective pair of carts (14) configured to cooperate with one another;
c) cyclically conveying, by means of the first linear motor and the second linear motor, each pair of carts (14) along an operative path (P) along which the first cart (14a) and second cart (14b) of such pair of carts (14) perform operations on the packaging material by mutually interacting with the packaging material;
d) advancing the packaging material along a direction parallel to the operative path (P);
the method further comprising the steps of:
e) detecting a position of the first cart (14a) and second cart (14b) of the same pair of carts (14) along the operative path (P), for each pair of carts (14);
f) calculating a position correction for the first cart (14a) and/or for the second cart (14b) based on the detected positions.

2. Method as claimed in claim 1, wherein the position correction calculation is based on at least one of:
- a first correction value indicative of a position difference between the detected position of the first cart (14a) with respect to a first nominal position value,
- a second correction value indicative of a position difference between the detected position of the second cart (14b) with respect to a second nominal position value, and/or
- an offset (D) between the detected positions of said first cart (14a) and second cart (14b) of the same pair of carts (14).

3. Method as claimed in claim 1 or claim 2, comprising performing the position correction for the first cart (14a) and/or for the second cart (14b) by means of at least one of the first linear motor and the second linear motor.

4. Method as claimed in claim 2 and claim 3, comprising performing the position correction for the first cart (14a) and/or for the second cart (14b) until the calculated offset (D) reaches a predetermined threshold value, preferably substantially zero.

5. Method according to any of the previous claims, comprising, for each pair of carts (14), performing the position correction for the first cart (14a) and/or for the second cart (14b) by displacing at least one of the first cart (14a) and second cart (14b) of the same pair of carts (14) along a direction parallel to the operative path (P).

6. Method as claimed in any one of the foregoing claims, wherein the step e) of detecting is carried out for each said first cart (14a) by means of a first position sensor (16a) fixed with respect to the first track (13a), and for each said second cart (14b) by means of a second position sensor (16b) fixed with respect to the second track (13b).

7. Method as claimed in any one of the foregoing claims, wherein the first cart (14a) and the second cart (14b) comprise:
- a support frame (17) which is movably coupled with the first track (13a) or second track (13b), respectively, and carries an operative member (8, 10) for performing said operations on the packaging material; and
- a bracket (18) mounted directly to the support frame (17);
and wherein the step e) of detecting comprises sequentially detecting the position of said brackets (18) along the operative path (P).

8. Method as claimed in any one of the foregoing claims, wherein the method comprises the step of calibrating an apparatus (6) for performing operations on the packaging material comprising said first track (13a), said second track (13b), said first carts (14a) and said second carts (14b) by performing the position correction for the first cart (14a) and/or for the second cart (14b) during a calibration phase of the apparatus (6), different from an operating phase wherein the apparatus (6) performs said operations on the packaging material.

9. Method according to the preceding claim, comprising monitoring an operation of said apparatus (6) by performing the steps e) of detecting and f) of calculating during the operating phase.

10. Method as claimed in any one of the foregoing claims, wherein performing operation on a packaging material includes shaping a tube (3) of packaging material and sealing the tube (3) along successive transversal cross-sections thereof in order to obtain a sequence of packs (2a).

11. Method as claimed in any one of the foregoing claims, comprising, if a position correction reaches a predetermined anomaly threshold, adjusting operation of the first (14a) and/or second (14b) cart, preferably by:
- immediately performing the position correction for the first cart (14a) and/or for the second cart (14b), and/or
- slowing down and/or interrupting advancement of the first (14a) and/or second (14b) cart.

12. A computer program product comprising instructions loadable in, and executable by, electronic processing resources (15) and programmed to cause, when executed, said electronic processing resources (15) to perform the steps of the method according to any of the foregoing claims.

13. Apparatus (6) for performing operations on a packaging material, the apparatus (6) comprising:
- a first fixed frame (12a) supporting a first endless track (13a) and a second fixed frame (12b) supporting a second endless track (13b);
- first carts (14a) movably coupled to the first track (13a) and second carts (14b) movably coupled to the second track (13b);
- a first linear motor configured to cyclically move the first carts (14a) along the first track (13a) independently from one another, and a second linear motor configured to cyclically move the second carts (14b) along the second track (13b) independently from one another;
- a control unit (15);
- a first position sensor (16a) fixed with respect to the first frame (12a) and a second position sensor (16b) fixed with respect to the second frame (12b);
wherein each first cart (14a) defines with a corresponding second cart (14b) one respective pair of carts (14) configured to cooperate with one another;
wherein the control unit (15) is configured to control a cyclical conveying of each pair of carts (14) along an operative path (P) along which the first cart (14a) and second cart (14b) of such pair of carts (14) perform operations on the packaging material by mutually interacting with the packaging material;
wherein the first position sensor (16a) is configured to sequentially detect a position of each first cart (14a) along the operative path (P) and to generate a first signal correlated with each position detection;
wherein the second position sensor (16b) is configured to sequentially detect a position of each second cart (14b) along the operative path (P) and to generate a second signal correlated with each position detection;
and wherein the control unit (15) is configured to, for each pair of carts (14):
- receive the first signal and the second signal; and
- calculate a position correction for the first cart (14a) and/or for the second cart (14b) based on the received first signal and second signal.

14. Apparatus (6) as claimed in the previous claim, wherein the control unit (15) is configured to, for each pair of carts (14), perform the position correction for the first cart (14a) and/or for the second cart (14b) by means of at least one of the first linear motor and the second linear motor.

15. Packaging machine (1) configured to produce sealed packages (2) containing a pourable product starting from a web (4) of packaging material, the packaging machine (1) comprising an apparatus (6) as claimed in claim 13 or claim 14.
